# EUROPEAN PATENT SPECIFICATION

(11) **EP 2 222 613 B1**
(45) Date of publication and mention of the grant of the patent: **10.04.2019**
(21) Application number: 08855381.3
(22) Date of filing: 11.11.2008
(51) Int. Cl.: C04B 24/26, C04B 28/14

(54) **Method for producing GYPSUM FORMULATIONS**
Verfahren zur Herstellung von GIPSFORMULIERUNGEN
Procédé pour la préparation des FORMULATIONS DE PLÂTRE

(30) Priority: 30.11.2007 GB 0723442
(43) Date of publication of application: 01.09.2010
(73) Proprietor: BPB Limited, Binley Business Park Coventry CV3 2TT (GB)
(72) Inventor: FISHER, Robin, Leicestershire LE11 5XZ (GB)
(74) Representative: Chapman, Helga Claire
(86) International application number: PCT/GB2008/051047
(87) International publication number: WO 2009/068899

(56) References cited:
- WO-A-2004/094336
- AU-A- 5 584 480
- US-B1- 7 261 772
- US-B2- 7 052 773

## Description

The present invention concerns a method for the production of gypsum formulations - especially using gypsum formulations which are suitable for the manufacture of gypsum building boards.

Such gypsum building boards can be surface reinforced, for example, as plasterboard (which is generally reinforced with paper liners) or gypsum board (which may be reinforced at or near the surface by a woven or non-woven reinforcement, or solely reinforced in its core).

Gypsum stucco slurry (and optionally fibre reinforcement) is typically shaped through an extruder or between rollers or belts. For surface reinforced gypsum board, the gypsum slurry is sandwiched between surface reinforcements before shaping. In this arrangement, the edges of the surface reinforcement or liner sheets are typically sealed together. After shaping of the gypsum board, the wet slurry is allowed to set and the set board is cut into desired lengths and dried to form the final board.

It has been found that water-swellable clays present in some natural sources of gypsum tend to increase the water demand of the slurry which ultimately forms the plaster, typically by forming a flocculated structure in the presence of calcium ions.

It has been proposed in US patent 7261772 to add a comb-branched copolymer that are formed from a polyether having terminal unsaturated groups, for example by polymerising a polyether macromonomer having a polyalkylene oxide chain, reacted with an unsaturated monomer such as acrylic acid or methacrylic acid. The polyalkylene oxide is typically derived from ethylene oxide, propylene oxide, butylenes oxide or the like; for example a polyethylene glycol or polypropylene glycol, or random or block copolymers thereof. The above US patent suggests that certain amine compounds are necessary in the gypsum composition.

We have found that improvements can be achieved if a basic water-soluble polymer having preferential affinity for clay is used instead of the amine compounds specified in the above US patent.

According to the invention, therefore, there is provided a method of producing a gypsum slurry according to claim 1 containing a water-swellable clay, in which there is added to the gypsum slurry a comb-branched copolymer as described in the abovementioned US patent as fluidiser, and a basic (non-acidic) water-soluble polymer having preferential affinity for clay.

Clays present in gypsum are known to interfere with the action of comb-branched polymer fluidisers, lowering the dose efficiency of such fluidisers. The latter fluidisers become preferentially adsorbed onto clays because the latter are more highly charged.

We have found that if certain basic water-soluble polymers are present in the gypsum slurry, they preferentially adsorb onto clay present in the slurry, thereby performing two functions, as follows:
1) to disperse the clay particles, which lowers the water gauge slightly; and
2) to block the sites which would otherwise be occupied by added fluidiser, such blocking allowing the fluidiser to perform its desired function of fluidising the plaster particles, which in turn results in further lowering of the water gauge.

Basic water-soluble polymers used in the method according to the invention include polyvinyl pyrrolidone, polyvinyl alcohol (either fully or partially hydrolysed), and certain cold water soluble starch derivatives (such as oxidised, dextrinised or ethylated starch).

Such polymers having preferential affinity for the clay (relative to the comb-branched copolymer) and are capable of forming surface hydrogen bonds with the clay, thereby helping to disperse the clay and inhibiting deleterious interaction with the comb-branched copolymer fluidiser. This effect helps to improve the dose efficiency of the fluidiser.

A preferred such water-soluble polymer is one which is soluble in cold water, such that it can be supplied as an aqueous solution thereby avoiding the need for an extra step to dissolve the polymer in hot water before addition to a slurry mixer.

The amount of the basic water-soluble polymer is from 0.01 to 2 grams per gram of clay present in the slurry.

An example of such a water-soluble polymer is polyvinyl alcohol (such as about 88% hydrolysed). Such a polymer can perform four functions simultaneously, namely
1) to act as a foaming agent,
2) to disperse the clay allow a reduction in water demand,
3) to increase the efficiency of comb-based copolymer based fluidisers allowing a reduction in water demand, and, in some instances,
4) to increase the paper-gypsum adhesion after drying.

In some embodiments, the polyvinyl alcohol may be silanised - for example, by reaction of the hydroxyl groups in PVA with silanol functional groups. Suitable examples of such silanised polyvinyl alcohols are hydrolysed vinyl ester polymers having a degree of hydrolysis of from 75 to 100% of the vinyl ester groups, and a content of silane-containing comonomer units of from 0.01 to 10 mol%. Such silanised polyvinyl alcohols are disclosed in detail in US Patent 7052773.

The comb-based copolymer flluidiser is present in an amount of 0.005 to 1% based on the total weight of the slurry. The comb-based copolymer may be produced by a method as described in, for example, US Patent 6527850, 6869988 and 7070648.

The basic water-soluble polymer and/or the comb-based copolymer may be added to a whipped aqueous foam to be mixed with a gypsum slurry, such an aqueous foam being produced by foaming water containing at least one foaming agent.

When an aqueous foam is used in the method according to the invention to produce a building board, the resulting board is lighter because it contains air bubbles, as is well known.

The water present in such a foam is typically ground water or tap water, which may have been filtered. Other non-deleterious materials, adjuvants and ingredients may, when appropriate, be present in the water from which the foam is made.

The gypsum slurry which is mixed with the whipped aqueous foam comprises hydratable gypsum (calcium sulfate), which has generally been obtained by gypsum calcination. The slurry may contain other non-deleterious mineral materials and/or ions such as phosphate and/or magnesium ions. The hydratable calcium sulfate may be, for example, anhydrous calcium sulfate (anhydrite II or III) or a calcium sulfate hemihydrate (CaSO₄.0.5 H₂O) in its alpha- or beta- crystalline form.

The gypsum is typically mixed with water to form a slurry before mixing with the aqueous foam described above; the water from which the slurry is made is typically ground water or tap water, which may have been filtered. Other non-deleterious materials, adjuvants and ingredients may, when appropriate, be present in the water from which the slurry is made.

The pH of the slurry is typically in the range 6.5 to 9.5, and the slurry may contain optional further ingredients, such as starch, water reducing agents, moisture repellents (such as silicone oils or waxes), reinforcing fibres, set accelerators and retarders, deformation inhibitors (such as anti-sagging agents), anti-shrink additives, recalcination inhibitors, foam stabilisers, levelling aids, bactericides, fungicides, pH adjusters, colouring agents, fire retardants and fillers (such as particulate mineral material or plastics, which may in some embodiments be in expanded form).

The slurry may contain fibre reinforcement, such as glass fibres (typically cut fibres), and may be used to form gypsum board. Gypsum board produced according to the invention may be with or without surface reinforcement or liner sheets; when surface reinforcement is used, it may, for example, be of fibre scrim or fibre mesh.

When gypsum building board is produced according to the invention, it is preferably formed to a desired thickness by extrusion or pressing between rollers or belts.

Gpyusm builing boards are described comprising a set aqueous gypsum slurry containing a water swellable clay, a comb-based copolymer fluidiser and a basic water-soluble polymer having preferential affinity for clay.

Certain aspects and features of the present invention will now be illustrated by the following worked examples.

### EXAMPLES

150 g of DSG (desulphogypsum) stucco to which had been added 1.5% by weight Wyoming bentonite (a naturally swelling clay) was used in each test except the control - in the latter no clay was added.

Water at 40°C was added in the weighed amount into a small Waring blender and 0.1% trisodium citrate (w/w stucco) as retarder was added to the blend along with solid additives, and the blender was operated for 10 seconds to dissolve the retarder.

Ethacryl (a commercially available comb-based copolymer which is an ethoxylated acrylic acid polymer) and other liquid additives as appropriate were added at this stage. Then, the stucco was sprinkled onto the solution over 30 seconds and left to stand for 30 seconds. Mixing time was 10 seconds on low speed. The slump diameter of the slurry was measured on the falling plate consistometer as described in Section C.3.1.1 of BS 1191: Part 1 : 1973.

The results summarised in the following Table 1 show the advantageous increased fluidity achieved by adding a comb-based polymer to an exemplary stucco containing clay. In this case the clay was deliberately added in order to provide experimental control, but similar effects are achieved with stucco which naturally contains water-swellable clay. The proportions of Ethacryl specified are the active contents.

**Table 1**

| **Stucco** | **Clay modifier** | **Addition (wt% actives on stucco)** | **Water gauge for a 58 - 60 mm slump (g/100g)** | **Slump diameter (mm)** | |
|---|---|---|---|---|---|
| | | | | **0.1% Ethacryl** | **0.2% Ethacryl** |
| Contains clay | None | 0 | 80 | 55 | 63 |
| Contains clay | Partially hydrolysed polyvinyl alcohol - DuPont Elvanol 51-04 L24 | 0.25 | 76 | 80 | 85 |
| Contains clay | Silanised partially hydrolysed polyvinyl alcohol - Wacker Polyviol 2700 | 0.25 | 79 | 76 | 88 |
| Contains clay | White dextrin - Avebe Avedex W35 | 0.25 | 80 | 65 | 75 |
| Control (no clay) | None | 0 | 81 | 87 | 95 |

## Claims

1. A method of producing a gypsum formulation, which method comprises providing an aqueous gypsum slurry containing a water swellable clay, adding to the gypsum slurry a comb-branched copolymer fluidiser, present in an amount of 0.005 to 1% based on the total weight of the slurry, and a basic water-soluble polymer, from 0.01 to 2 grams per gram of clay present in the slurry, and allowing a layer of the aqueous gypsum slurry to set, **characterised in that** the basic water-soluble polymer is polyvinyl pyrrolidone, polyvinyl alcohol, or a starch derivative such that said polymer is adsorbed onto sites of the clay and blocks occupation of the sites by the fluidiser, so as to disperse the clay in the slurry and reduce water demand therefor.

2. A method according to claim 1, wherein the polyvinyl alcohol is partially silanised.

3. A method according to any of claim 1 or claim 2, wherein the water-soluble polymer is soluble in cold water.

4. A method according to any of claims 1 to 3, wherein the comb-branched copolymer fluidiser comprises a polymer of a polyalkoxylated acrylic or methacrylic acid.

5. A method according to any of claims 1 to 4, wherein the layer of the aqueous slurry is allowed to set to form a building board.

6. A method according to claim 4, wherein the slurry is fed between spaced surface reinforcements so as to form a sandwich structure and the slurry is allowed to set between the surface reinforcements.

7. A method according to claim 6, wherein the slurry contains fibre reinforcement.

## Patentansprüche

1. Verfahren zur Herstellung einer Gipsformulierung, welches Verfahren das Bereitstellen einer wässrigen Gipsschlämme, die einen in Wasser quellbaren Lehm enthält, das Hinzufügen zur Gipsschlämme eines kammverzweigten Copolymer-Fluidisierers, gegenwärtig in einer Menge von 0,005 bis 1% auf Basis des Gesamtgewichts der Schlämme und ein wasserlösliches Polymer, von 0,01 bis 2 Gramm von Lehm gegenwärtig in der Schlämme und das Setzen lassen einer Schicht der wässrigen Gipsschlämme umfasst, **dadurch gekennzeichnet, dass** das grundlegende wasserlösliche Polymer Polyvinylpyrrolidon, Polyvinylalkohol oder ein Stärke-Derivat derartig ist, dass das Polymer auf Stellen des Lehms absorbiert wird und Besetzung von Stellen durch den Fluidisierer blockiert, um den Lehm in der Schlämme zu dispergieren und daher Wasserbedarf zu reduzieren.

2. Verfahren nach Anspruch 1, wobei der Polyvinylalkohol teilweise silanisiert wird.

3. Verfahren nach irgendeinem von Anspruch 1 oder Anspruch 2, wobei das wasserlösliche Polymer in kaltem Wasser löslich ist.

4. Verfahren nach irgendeinem der Ansprüche 1 bis 3, wobei der kammverzweigte Copolymer-Fluidisierer ein Polymer aus einer polyalkoxylierte Acryl- oder Methacrylsäure.

5. Verfahren nach irgendeinem der Ansprüche 1 bis 4, wobei das Setzen der Schicht der wässrigen Schlämme erlaubt wird, um eine Bauplatte zu formen.

6. Verfahren nach Anspruch 4, wobei der Schlamm zwischen beabstandete Oberflächenverstärkungen gespeist wird, um eine Sandwich-Struktur zu bilden, und dem Schlamm erlaubt wird, sich zwischen den Oberflächenverstärkungen zu setzen.

7. Verfahren nach Anspruch 6, wobei die Schlämme Faserverstärkung enthält.

## Revendications

1. Un procédé de production d'une formulation de plâtre, ledit procédé comprenant la fourniture d'une pâte de plâtre aqueuse contenant un argile gonflable dans l'eau, l'ajout à la pâte de plâtre d'un fluidiseur de copolymère ramifié en forme de peigne, présent dans une quantité de 0,005 à 1% en fonction du poids total de la pâte, et un polymère soluble dans l'eau basique, de 0,01 à 2 grammes par gramme d'argile présent dans la pâte, et laisser durcir une couche de la pâte de plâtre aqueuse, **caractérisé en ce que** le polymère soluble dans l'eau basique est pyrrolidone de polyvinyle, alcool de polyvinyle, ou un dérivé d'amidon de sorte que ledit polymère soit adsorbé sur des sites de l'argile et bloque une occupation des sites par le fluidiseur, de façon à disperser l'argile dans la pâte et réduire en conséquence la demande en eau.

2. Un procédé selon la Revendication 1, où l'alcool de polyvinyle est partiellement silanisé.

3. Un procédé selon l'une quelconque des Revendications 1 ou 2, où le polymère soluble dans l'eau est soluble dans de l'eau froide.

4. Un procédé selon l'une quelconque des Revendications 1 à 3, où le fluidiseur de copolymère ramifié en forme de peigne contient un polymère d'un acide méthacrylique ou acrylique polyalcoxylé.

5. Un procédé selon l'une quelconque des Revendications 1 à 4, où la couche de la pâte aqueuse est laissée durcir de façon à former un panneau de construction.

6. Un procédé selon la Revendication 4, où la pâte est introduite entre des renforts de surface espacés de façon à former une structure en sandwich et la pâte est laissée durcir entre les renforts de surface.

7. Un procédé selon la Revendication 6, où la pâte contient un renfort fibreux.
